# EUROPEAN PATENT APPLICATION

(11) **EP 4 588 968 A1**
(43) Date of publication of application: **23.07.2025**
(21) Application number: 25151428.7
(22) Date of filing: 13.01.2025
(51) Int. Cl.: C08K 3/22, C08K 5/00, F42B 3/103, H01R 13/193

(54) **ALIPHATIC POLYKETONE COMPOSITION WITH IMPROVED THERMAL STABILITY**

(30) Priority: 16.01.2024 US 202418413445
(71) Applicant: TE Connectivity Solutions GmbH, 8200 Schaffhausen (CH)
(72) Inventor: DESHMUKH, Shruti, Fremont, 94555 (US); CHIOTA, Jason Thomas, Fremont, 94555 (US); WANG, Lei, Fremont, 94555 (US); YUN, Hyo Chang, Fremont, 94555 (US)
(74) Representative: Ashton, Gareth Mark

(57) **Abstract**

A thermally stable aliphatic polyketone composition comprises an aliphatic polyketone, a metal deactivator, a scavenger and at least one antioxidant. The thermally stable aliphatic polyketone composition can be used in connector assembly including but not limited to a backshell (10) application.

## Description

### FIELD OF THE INVENTION

The present invention relates to an aliphatic polyketone composition with improved thermal stability. In particular, the invention is directed to an aliphatic polyketone composition comprising an aliphatic polyketone, a metal deactivator, a scavenger and at least one antioxidant which is a primary antioxidant. The aliphatic polyketone composition can also include a secondary antioxidant. The resulting aliphatic polyketone composition has improved thermal stability, as shown by improved elongation at break and can be used in many products, including electrical connectors.

### BACKGROUND OF THE INVENTION

Many products on the market now require thermal stability at higher temperatures for long term temperature exposures.

Polyketones are low cost and low carbon footprint (highly sustainable) materials which can be used in many different applications. Polyketones are polymers of carbon monoxide and at least one ethylenically unsaturated hydrocarbon. These polymers, however, can exhibit a deterioration of physical properties upon thermal oxidative degradation. Certain antioxidants have improved the thermal stability of these polymers.

EP 0714938 A2 describes a polyketone polymer composition. The composition comprises a combination of a major amount of linear alternating polyketone polymer and a minor amount of primary antioxidant, a secondary antioxidant and a scavenger. Preferably, the polymer composition of this application comprises a primary antioxidant selected from the group consisting of hindered phenols, aromatic amines and mixtures thereof; the secondary antioxidant is chosen from the group consisting of phosphites, phosphonites and mixtures thereof; and the scavenger is selected from the group consisting of metal oxides, metal hydroxides, metal carbonates, metal alkoxides, aryloxides, metal phosphates, metal sulfides, metal sulfates, metal nitrides, organic ketimines, organic carbodiimides, amines and mixtures thereof.

KR1018679390000 describes a polyketone composition having excellent heat resistant stability. The polyketone composition contains a linear alternating polyketone powder consisting of carbon monoxide, at least one olefin-based unsaturated hydrocarbon and a mixture of magnesium oxide and aluminum oxide. The described polyketone composition can be used in many industrial applications, including but not limited to automotive harness connectors.

US Patent Publication No. US2010/0282490 A1 describes a composition with enhanced heat resistance properties. The composition includes a polymer, a primary antioxidant, a secondary antioxidant and a metal deactivator selected from at least one of 2,2'-oxamido bis[ethyl 3-(3,5-di-tert-butyl-4-hydroxyphenyl)propionate] and oxalyl bis(benzylidenehydrazide). The compositions can also include a light stabilizer. The compositions can be used to manufacture insulations for wire and cable. The compositions have improved long-term heat aging compared to prior insulative compositions and also retain their color when exposed to heat. A method of making insulation for a conductor, such as a wire or a cable, made from a composition is also provided.

Even with all these advances, there exists a need for a polyketone composition with improved thermal stability which can be easily processed.

### SUMMARY OF THE INVENTION

An embodiment is directed to a thermally stable aliphatic polyketone composition comprising an aliphatic polyketone, a metal deactivator, a scavenger and at least one antioxidant.

An embodiment is directed to the process of forming a thermally stable, aliphatic polyketone composition.

Another embodiment is directed to the use of a thermally stable aliphatic polyketone composition in a backshell application.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

The accompanying drawings, which are incorporated into and form a part of the specification, schematically illustrate one or more illustrative embodiments of the invention and, together with the general description given above and detailed description given below, serve to explain the principles of the invention, and wherein:
FIG. 1 is a perspective view of an illustrative backshell shown in the latched position, the backshell incorporating the composition of the present invention.
FIG. 2 is a perspective view of the backshell of FIG. 1 shown in an open position.
FIG. 3 is a top view of the backshell of FIG. 2.

### DETAILED DESCRIPTION OF THE INVENTION

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

The aliphatic polyketone composition of the instant invention comprises an aliphatic polyketone with a metal deactivator, a scavenger and at least one antioxidant. The aliphatic polyketone composition can also include secondary antioxidant.

The aliphatic polyketone used in the thermally stable aliphatic polyketone composition of the instant invention is an alternating polymer of carbon monoxide and at least one ethylenically unsaturated hydrocarbon. The polymer chain of the preferred polyketone polymers is therefore represented by the repeating formula:

⁅ CO(-CH₂-CH₂)-⁆x ⁅CO(-G)-⁆y

where G is the moiety of ethylenically unsaturated hydrocarbon of at least 3 carbon atoms polymerized through the ethylenic unsaturation and the ratio of y:x is no more than 0.5. When copolymers of carbon monoxide and ethylene are employed in the compositions of the invention, there will be no second hydrocarbon present and the copolymers are represented by the above formula wherein y is zero. When y is other than zero, i.e. terpolymers are employed, the units and the -CO(-CH₂-CH₂)- units and the -CO(-G)- units are found randomly throughout the polymer chain, and preferred ratios of y:x are from 0.01 to 0.1.

Typically, the aliphatic polyketone used in the thermally stable aliphatic polyketone composition has a melting point in the range of about 175 to about 300°C. In one embodiment, the aliphatic polyketone used in the thermally stable aliphatic polyketone composition preferably has a number average molecular weight from about 20,000 to about 90,000. The aliphatic polyketone in one embodiment has a melt flow index of approximately 60g/10 min at 240°C as measured by ASTM D1238. An example of a polyketone that can be used in the thermally stable aliphatic polyketone composition of this invention is POKETON M330A, commercially available from Hyosung Polyketone. Other examples of commercially available aliphatic polyketones which can be used in the instant invention include POKETONE M330F, M630F, M33AF2Y, M93AG6F, and M33AG2A, all available from Hyosung Polyketone.

The thermally stable aliphatic polyketone composition also includes a metal deactivator or catalyst neutralizer. The function of the metal deactivator is to form an inactive complex with the catalytically active metal ion to prevent metal catalyzed degradation. By complexing the metal with the metal deactivator, the metal is prevented from associating with hydroperoxides, thereby reducing the ability of the metal to produce radicals from hydroperoxides by oxidation or reduction. Common metal deactivators include but are not limited to: oxalyl bis(benzylidene)hydrazine (1), citric acid (2), N,N'-(disalicylidene)-1,2-propanediamine (3), ethylene-diaminetetraacetic acid (EDTA) and its salts (4), mercaptobenzothiazoles, mercaptobenzimidazoles and many thiadiazole and triazole derivatives. An example of a commercially available metal deactivator is IRGANOX 1024 (CAS 32687-78-8)(3-(3,5-ditert-butyl-4-hydroxyphenyl)-N'-[3-(3,5-ditert-butyl-4-hydroxyphenyl)propanoyl]propanehydrazide), available from BASF Corporation.

In addition, the thermally stable aliphatic polyketone composition includes a scavenger. The scavenger is a substance which neutralizes free or bound water and/or acid or acid components. Scavengers which are useful in the thermally stable aliphatic polyketone composition of the instant invention may be organic or inorganic compounds. These include metal oxides such as ZnO, CaO, and Al₂O₃; metal hydroxides such as Mg(OH)₂, Ca(OH)₂, and Al(OH)₂; metal carbonates such as CaCO₃ and MgCO₃; metal sulfides such as CdS and ZnS; metal alkoxides or aryloxides such as Ti(OCH₃)₄ and Ti(OC₆H₅)₄; metal sulfates such as CaSO₄ and MgSO₄; metal phosphates such as Ca₃(PO₄)₂ and LaPO₄; metal nitrides such as AlN and Zn₃N₂; metal silicates or zeolites/molecular sieves such as Mg₂Si₃O₈ and M2/n .Al₂O₃.xSiO₂.yH₂O; organic ketimines such as benzophenone anil; organic carbodiimides and mixtures thereof. Metal oxides, metal hydroxides, metal carbonates, organic carboximides and complex mixtures are preferred.

The thermally stable aliphatic polyketone composition also includes at least one antioxidant. Prefereably, the one antioxidant is a primary antioxidant. Primary antioxidants mainly act as chain-breaking antioxidants and react rapidly with peroxy and other radicals. Examples of primary antioxidants include compounds with reactive OH or NH groups. Inhibition occurs via a transfer of a hydrogen from the reactive OH/NH group to a reactive free radical. The resulting radical formed from the antioxidant is relatively stable and does not abstract a hydrogen from a polymer chain. Primary antioxidants include hindered phenols and hindered amines.

Hindered phenols are primary antioxidants that act as hydrogen donors. Hindered phenols react with peroxy radicals to form hydroperoxides to prevent the abstraction of hydrogen from the polymer backbone. Hindered phenols suitable for use in the invention include but are not limited to: IRGANOX 1010 ((pentaerythrityl-tetrakis[3-(3,5-di-tert-butyl-4-hydroxyphenyl) propionate]) (CAS 6683-19-8); IRGANOX 1076 (octadecyl-3-(3,5-di-tert-butyl-4-hydroxyphenyl) propionate (CAS 2082-79-3)); IRGANOX 1330 (1,3,5-trimethyl-2,4,6-tris(3,5-di-tert-butyl-4-hydroxybenzyl)benzene (CAS 1709-70-2)); IRGANOX 3114 ((tris(3,5-di-tert-butyl-4-hydroxybenzyl)isocyanurate) (CAS 27676-62-6)); IRGANOX 1098 (a N,N'-(Hexane-1,6-diyl)bis[3-(3,5-di-tert-butyl-4-hydroxyphenyl)propanamide]) (CAS 23128-74-7) and mixtures of the above. IRGANOX 1010, IRGANOX 1076, IRGANOX 1330, IRGANOX 3114 and IRGANOX 1098 are commercially available from BASF Corporation.

Hindered amines include alkyl, aryl or alkylaryl amines. Examples of such hindered amines include but are not limited to: TINUVIN 622 (Poly(4-hydroxy-2,2,6,6-tetramethyl-1-piperidineethanol-alt-1,4-butanedioic acid) (CAS 65447-77-0), CHIMASSORB 119 (6-N-[3-[[4,6-bis[butyl-(1,2,2,6,6-pentamethylpiperidin-4-yl)amino]-1,3,5-triazin-2-yl]-[2-[[4,6-bis[butyl-(1,2,2,6,6-pentamethylpiperidin-4-yl)amino]-1,3,5-triazin-2-yl]-[3-[[4,6-bis[butyl-(1,2,2,6,6-pentamethylpiperidin-4-yl)amino]-1,3,5-triazin-2-yl]amino]propyl]amino]ethyl]amino]propyl]-2-N,4-N-dibutyl-2-N,4-N-bis(1,2,2,6,6-pentamethylpiperidin-4-yl)-1,3,5-triazine-2,4,6-triamine) (CAS106990-43-6) and CHIMASSORB 2020 (1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine) (CAS 192268-64-7) and mixtures of the above. TINUVIN 622, CHIMASSORB 119 and CHIMASSORB 2020 are commercially available from BASF Corporation. In one embodiment of the invention, both a hindered amine and a hindered phenol are used as the primary antioxidant.

The thermally stable aliphatic polyketone composition can also include be a secondary antioxidant. Secondary antioxidants react with hydroperoxides to yield non-radical, non-reactive products, and thermally stable products. Secondary antioxidants are frequently called hydroperoxide decomposers. When primary and secondary antioxidants are used together, they yield synergistic stabilization effects. Secondary antioxidants include but are not limited to phosphites, phosphonites and thiosynergists.

Phosphites and phosphonites which can be used as the secondary antioxidants in the thermally stable aliphatic polyketone composition have the following formula: 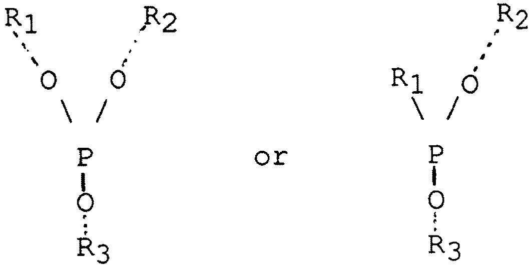 wherein at least one of the R groups is H or alkyl or aryl substituent of up to and including 20 carbon atoms and the other R groups are the same or different groups having the same definition. Preferred secondary antioxidants include tris(2,4-di-tert-butylphenyl)-phosphite such as IRGAFOS 168 (CAS 31570-04-4), triphenylphosphite such as WESTON TPP (CAS 101-02-0), diphenylphosphite such as WESTON OPP (CAS 4712-55-4), and bis(2,4-di-tert-butylphenyl)-pentaerythritol diphosphonite such as ULTRANOX 626 and ULTRANOX 627 (CAS 26741-53-7). IRGAFOS 168 is available from BASF Corporation. WESTON TPP, WESTON OPP and ULTRANOX 626 are available from SI Group.

Thiosynergists are sulfur-based secondary antioxidants that decompose hydroperoxides. The most common commercially available thiosynergists are based on either lauric or stearic acid. Thiosynergists that can be used in the invention include: (1) SEENOX 412S (Pentaerythritol tetrakis(B-laurylthiopropionate) (CAS 29598-76-3)), (2) distearyl-3,3'-thiodipropionate CAS 693-36-7) such as NAUGARD DSTDP, LOWINOX DSTDP, CYANOX SDTP, and IRGANOX PS802, (3) Dilauryl-3,3'-thiodipropionate (CAS 123-28-4) such as NAUGARD DLTDP, LOWINOX DLTDP, CYANOX LDTP, and IRGANOX PS800. SEENOX 412S is commercially available from Shipro Kasei Kaisha. IRGANOX PS 802 and IRGANOX PS800 are available from BASF Corporation. CYANOX SDTP and CYANOX LDTP are available from Solvay Corporation. NAUGARD DSTDP, NAUGARD DLTDP, LOWINOX DSTDP and LOWINOX DLDTP are available from Si Group.

The amount of metal deactivator, scavenger, and at least one antioxidant in the thermally stable aliphatic polyketone composition is in the range of about 0.1 to 5 wt. %. More preferably the amount of metal deactivator, scavenger, and at least one antioxidant in the thermally stable aliphatic polyketone composition is in the range of about 0.5 to 1 wt. %.

Other conventional additives may be added to the aliphatic polyketone composition of the instant invention. Examples of conventional additives include pigments, dyes, voiding agents, antistatic agents, foaming agents, plasticizers, radical scavengers, antiblocking agents, anti-dust agents, antifouling agents, surface active agents, slip aids, optical brighteners, plasticizers, viscosity modifiers, gloss improvers, dispersion stabilizers, UV stabilizers, UV absorbers, antioxidants, lubricity agents, heat stabilizers, hydrolysis stabilizers, cross-linking activators, coupling agents, layered silicates, radio opacifiers, such as barium sulfate, tungsten metal, non-oxide bismuth salts, fillers, colorants, reinforcing agents, adhesion promoters, impact strength modifiers, and any combination thereof. Such additives may be included in conventional amounts.

In addition, the thermally stable aliphatic polyketone composition may be subject to crosslinking. The aliphatic polyketone composition can be crosslinked using heat, crosslinking agents or radiation crosslinking.

One method of obtaining a crosslinked aliphatic polyketone composition is using heat. In one embodiment, the polyketone polymer can be heated from about 70° C to about 250° C to obtain the desired level of crosslinking in order to achieve the thermal stability of the composition.

In addition to heat, the aliphatic polyketone composition can be crosslinked using a crosslinking agent. Examples of crosslinking agents include chemicals, monomers, or polymers having more than one homo- or hetero-functional group. In some embodiments of the present invention, the crosslinking agent has more than one radical generating moiety, such as aryl ketone, azide, peroxide, diazo, carbene or nitrene generator. In other embodiments, the crosslinking agent has more than one reactive group such as vinyl, carboxy, ester, epoxy, hydroxyl, amido, amino, thio, N-hydroxy succinimide, isocyanate, anhydride, azide, aldehyde, cyanuryl chloride or phosphine that can thermochemically react with a functionalized binder polymer. In addition, the product of the instant invention can be crosslinked using radical generators. Radical generators can form new bonds through radical-radical combination, addition to unsaturated bonds, hydrogen abstraction and subsequent recombination, as well as possible electron transfer reactions. Examples of radical initiators include benzophenone, acetophenone derivatives, peroxyides, peroxy compounds, benzoin derivatives, benzilketals, hydroxyalkylphenones and aminoalkylphenones, O-acyl oximoketones, cylphosphine oxides and acylphosphonates, thiobenzoic S-esters, azo and azide compounds, triazines, 1,2 diketones, quinones, coumarins, xanthones. In another embodiment, vinyl silanes can be used as the crosslinking agent.

Further, the aliphatic polyketone composition can be crosslinked using radiation crosslinking. Radiation crosslinking occurs where the aliphatic polyketone composition is exposed to an agent such as UV light, electron beam, or gamma-radiation with or without additional crosslinking agents or substances. If radiation is used as the crosslinking agent, the product is exposed to radiation in the range of 50 kGy to 1100 kGy, preferably 50 to 300 kGy to obtain the desired crosslinking. The desired crosslinking is obtained when the improved physical properties and thermal stability are achieved.

In another aspect, the invention relates to the preparation of the thermally stable aliphatic polyketone composition. The specific method of incorporating the additives (metal deactivator, scavenger and at least one antioxidant) into the aliphatic polyketone must have careful control of the temperature and shear rate to ensure that the combination results in a suitable blend. The mixing equipment can be any suitable equipment used in the art of mixing concentrated solids. Examples of such suitable equipment for the thermally stable aliphatic polyketone composition include a batch mixer, such as a Brabender mixer, a Banbury mixer; a single extruder; a twin screw extruder; a high speed centrifugal mixer; a Henschel mixer; a ribbon blender; shakers; tube rollers; and the like.

Once the thermally stable aliphatic polyketone composition is formed, it can be further processed. The thermally stable aliphatic polyketone composition can be extruded, injection molded, overmolded, compression molded, cast, spin cast, reaction injection molded, laminated, dispensed, potted, 3D printed, or selectively printed.

There are many uses for the thermally stable aliphatic polyketone composition of the instant invention. For example, the thermally stable aliphatic polyketone composition can be made into connectors, backshells, wires, cables, printed wire boards, or EMI shields as well as other computer components. The thermally stable aliphatic polyketone composition can be used to make electronic components which meet UL 94V flammability standards, such as smart phones, electric motors, e-powertrains, batteries and battery enclosures, chargers for electric vehicles and other components of electric vehicles.

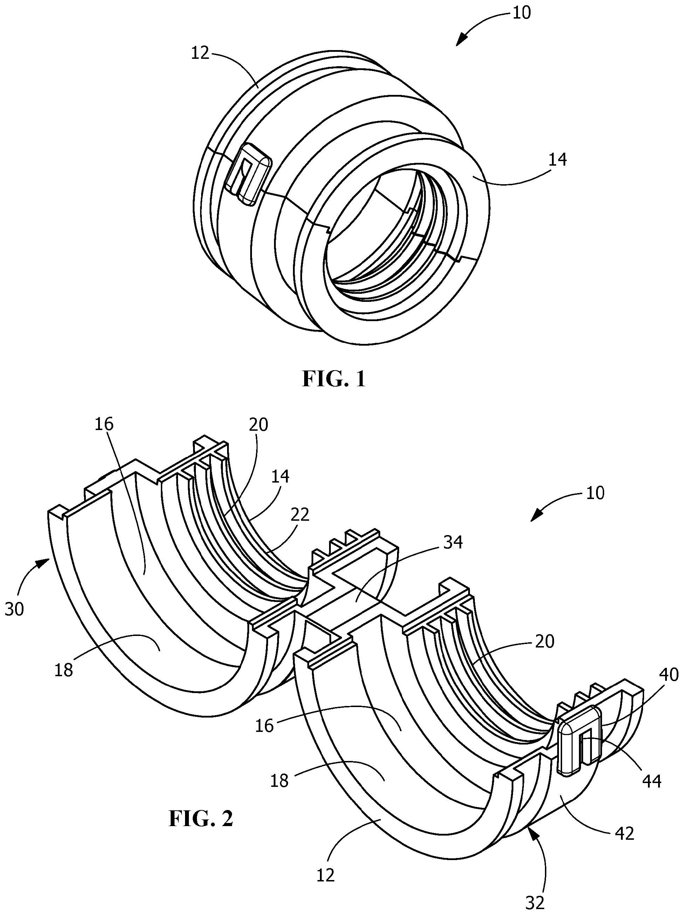

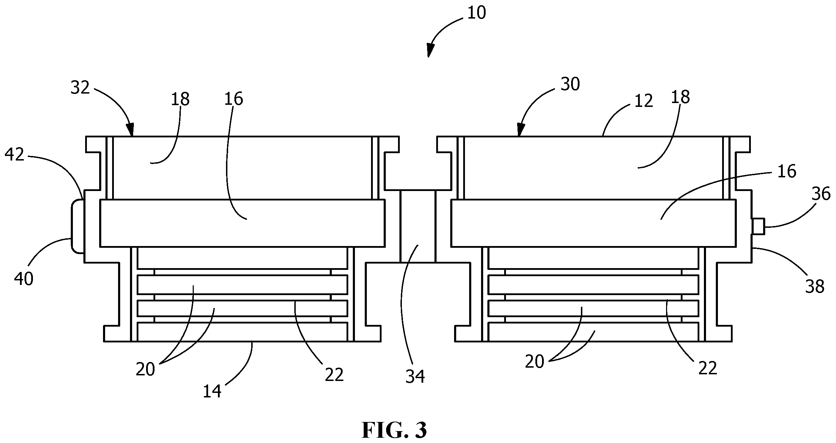

For example, in one embodiment, the thermally stable aliphatic polyketone composition can be used in a connector assembly. Examples of possible components in a connector assembly include but are not limited to a connector housing or a backshell. An illustrative embodiment of a backshell 10 which includes the thermally stable aliphatic polyketone composition is shown in FIGS. 1 through 3. The backshell 10 has a generally cylindrical configuration with a connector housing mating end 12 and a cable receiving end 14. The housing mating end 12 has one or more projections 16 which extend inward from an inner surface 18 of the housing mating end 12 or one or more recesses 16 which extend into an inner surface 18 of the housing mating end 12. The projections 16 are provided to engage a mating recess or the recess(es) 16 is provided to engage a projection(s) (not shown) of an electrical connector (not shown) to retain the backshell 10 on the connector when the backshell 10 is in the closed or locked position.

The cable receiving end 14 has deformable ribs 20 which extend inward from an inner surface 22 of the cable receiving end 14. The deformable ribs 20 are provided to engage a cable or wire (not shown) which is terminated to the electrical connector.

The backshell 10 has a first backshell member 30 and a second backshell member 32. The first backshell member 30 and the second backshell member 32 are movably joined together by a hinge member 34. The first backshell member 30 has latching projection 36 which extends from an outer surface 38 of the first backshell member 30. The second backshell member 32 has a latching arm 40 which extends from an outer surface 42 of the second backshell member 32. The latching arm 40 has a latching opening 44 which is dimensioned to receive the latching projection 36 when the first backshell member 30 is moved to the closed position relative to the second backshell member 32, as shown in FIG. 1.

The backshell 10 is configured to be positioned on the electrical connector and the cable or wire when in the closed position. In the closed position, the one or more projections or recesses 16 are provided to engage the mating recess or projection(s) of the electrical connector, the deformable ribs 20 are provided to engage the cable or wire, and the latching projection 36 is positioned in the latching opening 44 of the latching arm 40 to secure the backshell 10. In the illustrative embodiment, the backshell provides a high level of protection and allows convoluted tubing to nest within the rear of the backshell. Although a straight backshell is shown, the backshell may have other configurations, such as, but not limited to a right angle configuration. In addition, the thermally stable aliphatic polyketone composition may be used for other types of connectors, wires, cables, printed wire boards, or EMI shields as well as other electrical components.

The illustrative backshell 10 may be used in harsh environment applications having wide operating temperatures and where even a small degradation in connection may be critical. Such temperature ranges may be, for example, between approximately -55 °C to approximately 150 °C. The backshell 10 provides secure locking and exhibits no mechanical or physical damage after sinusoidal vibration levels of 20 Gs at 10 to 2000 Hz in each of the three mutually perpendicular planes.

### Examples

Various different compositions according to the instant invention were prepared and are set out in the following chart. The aliphatic polyketone, POKETONE M330A from Hyosung Polyketone and the various additives were compounded in a twin screw extruder. The compound was pelletized. Tensile bars made from the pelletized compound were injection molded. The tensile bars were tested for elongation on an Instron tester following ASTM D638 procedures after 1000 hours of thermal aging at 125°C.

| Material Type | Material | (1) | (2) | (3) | (4) | (5) | (6) | (7) | (8) | Control |
|---|---|---|---|---|---|---|---|---|---|---|
| Polymer | Polyketone | 99.15 | 98.5 | 98.95 | 98.55 | 98.3 | 98.65 | 98.05 | 97.3 | 100 |
| Primary Antioxidant | Irganox 1010 | 0.5 | 1 | 0.5 | 0.5 | 0.5 | 0.5 | 0.5 | | |
| | Tinuvin 622 | 0.25 | 0.5 | 0.25 | 0.25 | 0.25 | 0.25 | 0.25 | 0.25 | |
| | Irganox 3114 | | | | | | | | 0.5 | |
| | Chimassorb 2020 | | | | | | | | 0.25 | |
| Secondary Antioxidant | Evanstab 1218 | | | | | 0.25 | | 0.5 | 1 | |
| Scavenger | Mg(OH)2 | 0 | 0 | | 0.5 | 0.5 | 0.5 | 0.5 | 0.5 | |
| Metal Deactivator | Irganox 1024 | 0.1 | 0.2 | 0.3 | 0.2 | 0.2 | 0.1 | 0.2 | 0.2 | |
| Elongation at break (%) | | 3.6 | 5.6 | 5 | 4.3 | 6.5 | 4.2 | 6.8 | 7.2 | 2.5 |

These examples were compared to a control example of only polyketone. The polyketone had an elongation at break of 2.5% after 1000 hours of thermal aging at 125° C. There was a 188% increase in elongation at break between the control and Sample (8) F32. The increase in elongation shows the direct correlation to an increase in thermal stability of the composition. When Sample 1 is compared to Sample 2, it shows that increasing the metal deactivator in the presence of an antioxidant provides better elongation at break. Similarly, Sample 3 shows that adding more metal deactivator to the composition increases the elongation at break. Comparing Sample 6 to Sample 1 shows that the addition of the scavenger improves the elongation at break. Samples 5 and 7 show that the addition of a secondary antioxidant further improves the elongation at break of the composition. Finally, Sample 8 shows that using a higher thermal stability primary antioxidant as compared to a lower thermal stability antioxidant shows additional improvement in the elongation at break. Generally lower thermal stability antioxidants have a melting point in the range of about 110-130° C, while higher thermal stability antioxidants have a melting point in the range of about 210-230° C.

These experimental results show that the addition of one additive improves the stability of the aliphatic polyketone composition. In addition, the usage of several of the various additives in combination significantly increases the thermal stability of the aliphatic polyketone composition. In addition, the examples show that the addition of a metal deactivator with a primary phenolic and primary amine antioxidant improved the thermal stability of the thermally stable aliphatic polyketone composition by 44% (as shown in Sample 1) over the control. These experimental results also show that increasing the amount of the metal deactivator in the composition showed significant improvement in the elongation at break of the composition.

One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A thermally stable aliphatic polyketone composition comprising an aliphatic polyketone, a metal deactivator, a scavenger and at least one antioxidant.

2. The thermally stable aliphatic polyketone composition of claim 1, wherein said at least one antioxidant is a primary antioxidant.

3. The thermally stable aliphatic polyketone composition of claim 2, wherein said primary antioxidant is chosen from the group consisting of amines and phenols and mixtures thereof.

4. The thermally stable aliphatic polyketone composition of any preceding claim, wherein said thermally stable polyketone composition includes a secondary antioxidant chosen from the group consisting of phosphites, phosphonites and thiosynergists.

5. The thermally stable aliphatic polyketone composition of any preceding claim, wherein said scavenger is chosen from the group consisting of metal oxides, metal hydroxides, metal carbonates, metal sulfides, metal alkoxides and metal nitrides.

6. The thermally stable aliphatic polyketone composition of any preceding claim, wherein said scavenger comprises magnesium hydroxide.

7. The thermally stable aliphatic polyketone composition of any preceding claim, wherein said metal deactivator comprises 3-(3,5-ditert-butyl-4-hydroxyphenyl)-N'-[3-(3,5-ditert-butyl-4-hydroxyphenyl)propanoyl]propanehydrazide.

8. The thermally stable aliphatic polyketone composition of any preceding claim, wherein said aliphatic polyketone composition is crosslinked.

9. A process for forming a thermally stable aliphatic polyketone composition comprising mixing an aliphatic polyketone with a metal deactivator, scavenger and at least one antioxidant.

10. The process of claim 9, wherein said thermally stable aliphatic polyketone composition is crosslinked.

11. A connector assembly made from a thermally stable aliphatic polyketone composition according to any one of claims 1 to 8.

12. The connector assembly of claim 11, wherein said at least one antioxidant is a mixture of a hindered amine and a hindered phenol.

13. The connector assembly of claim 11 or 12, wherein said thermally stable aliphatic polyketone composition is crosslinked.

14. The connector assembly of claim 11, 12 or 13, wherein said connector assembly includes a backshell (10).

15. The connector assembly of claim 14, wherein said backshell (10) has a first backshell member (30) and a second backshell member (32).
